# EUROPEAN PATENT APPLICATION

(11) **EP 2 481 296 A1**
(43) Date of publication of application: **01.08.2012**
(21) Application number: 12152895.4
(22) Date of filing: 27.01.2012
(51) Int. Cl.: A23L 1/00, A23L 1/0524, A23L 2/54, B65D 83/00, C12G 1/00, C12G 3/00

(54) **Beverage product, a method of creating a long lasting mouth feel sensation and use of foam stabilisers in a beverage product**

(30) Priority: 28.01.2011 GB 201101502
(71) Applicant: Britvic Soft Drinks Limited, Chelmsford Essex CM1 1TU (GB)
(72) Inventor: Dando, Bill, Chelmsford, Essex CM1 1TU (GB); Robbins, Ian, Westway Chelmsford Essex CM1 3BG (GB)
(74) Representative: Atkinson, Jennifer

(57) **Abstract**

A beverage product comprising a dispenser and a beverage, in which the dispenser has a container for holding the beverage and a sealed aperture which is openable to enable the beverage to be dispensed from the container and in which the beverage is a liquid comprising an edible foam stabiliser and having a sparingly soluble gas dissolved therein, the beverage is held under a gaseous pressure in a head space above the beverage in the container, the gaseous pressure sufficient to propel the beverage from the dispenser as a foam and/or an effervescent foam and/or an effervescent liquid when the aperture is opened.

## Description

### Field of Invention

This invention relates to a beverage product, a method of producing a long lasting mouth feel sensation and use of foam stabilisers, such as pectin, in a beverage product.

### Background

Fizzy beverages such as soft drinks and mineral waters have long been very popular with consumers. One aspect of these drinks that is particularly enjoyed is the effervescent or "prickly" mouth-feel provided by the bubbles in these drinks. This mouth-feel is usually obtained by dissolving carbon dioxide, which is fairly soluble in water in the beverage. The carbon dioxide is kept in solution by keeping the beverage in a pressurised container. When the container is opened the fairly soluble carbon dioxide starts to come out of solution to form bubbles.

An alternative to carbonated beverages are foaming drinks. Rather than being carbonated, these drinks have more sparingly soluble gasses dissolved in them and are kept in pressurised containers to keep some of the gas in solution. The sparingly soluble gasses come out of solution very quickly when the beverage is dispensed from the container producing very small bubbles of gas within the beverage. Small bubbles in these drinks provide a more silky mouth feel rather than the prickly mouth-feel provided by the larger bubbles in carbonated beverages.

It is also known to provide still beverages such as water or fruit drinks in containers that have a nozzle so that the drink can be dispensed directly into the mouth by squeezing the bottle.

Consumers are often looking out for new beverages that provide a different mouth-feel and/or drinking experience from what they have experienced previously.

### Statements of Invention

The present invention relates to a beverage product comprising a dispenser and a beverage, in which the dispenser has a container for holding the beverage and a sealed aperture which is openable to enable the beverage to be dispensed from the container and in which the beverage is a liquid comprising an edible foam stabiliser and having a sparingly soluble gas dissolved therein, the beverage is held under a gaseous pressure in a head space above the beverage in the container, the gaseous pressure sufficient to propel the beverage from the dispenser as a foam and/or an effervescent foam and/or an effervescent liquid when the aperture is opened.

The present invention provides a beverage with a different mouth-feel and/or drinking experience as the presence of the edible foam stabiliser in the beverage may result in more foam being produced and/or the foam lasting longer than when the beverage does not comprise an edible foam stabiliser.

Preferably the sparingly soluble gas is nitrogen or oxygen, more preferably nitrogen.

An advantage of using nitrogen or oxygen is that they are non-toxic, palatable gasses that may be used in food and/or beverage products. These gasses may dissolve sparingly in water and aqueous solutions and provide small bubbles that give the beverage a silky mouth-feel. The small bubbles may also cause the beverage to form into foam.

Preferably the beverage product may be arranged such that the beverage is propelled from the dispenser as foam.

An advantage of the beverage being propelled from the dispenser as foam may be that foam has a different mouth-feel from a liquid beverage.

An advantage of including a foam stabiliser in the beverage may be that the foam may last longer than the foam produced by a beverage that does not comprise a foam stabiliser.

The edible foam stabiliser may stabilise the foam without significantly increasing the viscosity of the beverage.

The edible foam stabiliser may be pectin, more preferably pectin derived from sugar beet. An advantage of using pectin, and in particular pectin derived from sugar beet may be that it may cause more foam to be produced and may cause the foam to last longer without significantly increasing the viscosity of the liquid.

The edible foam stabiliser is preferably of a type and concentration that causes the foam to be stable for at least 5 seconds, preferably at least 10 seconds, more preferably at least 20, 30, 40, 50 or 60 seconds or more.

The aperture in the beverage product may be sealed using a nozzle that is openable to enable the beverage to be dispensed.

The beverage product wherein the nozzle or at least part of the path or tube leading to the nozzle preferably has a tortuous path that may cause the beverage to form a jet or to spray when it is dispensed through the nozzle.

An advantage of using a nozzle that has a tortuous path is that the beverage may be caused to foam more, to spray and/or to mix with air when it passes through the tortuous path.

The nozzle is preferably openable by hand or by mouth or teeth.

An advantage of being able to open the nozzle with the mouth or teeth may be that it may be easier to dispense the drink directly into the mouth of the consumer.

The nozzle is preferably re-sealable. An advantage of the nozzle being re-sealable may be that a portion of the beverage can be dispensed and the remaining portion can be stored for a period of time. The remaining gas may stay dissolved. The beverage may be less likely to spill out of the dispenser.

The beverage in the beverage product is preferably held under pressure by gas in the headspace at a pressure of at least 2.5 atmospheres gauge at 5 to 15°C.

An advantage of the beverage product being held under pressure by gas in the headspace at a pressure of at least 2.5 atmospheres may be that the beverage will be forced out of the dispenser by this pressure when the aperture is opened. This pressure may cause fairly soluble and/or sparingly soluble gasses to remain dissolved in the beverage.

The pressure is preferably high enough to propel the beverage at least 5cm, preferably at least 10cm more preferably at least 30cm, 50cm, or at least 100cm from the dispenser when the nozzle is opened. Preferably the beverage is propelled as foam.

The beverage in the beverage product preferably further comprises one or more fairly soluble gasses and the fairly soluble gas has a solubility that is greater than the sparingly soluble gas and which may be at least 1g/kg in water at 20°C.

An advantage of the beverage further comprising one or more fairly soluble gasses having a solubility of at least 1g/kg in water at 20°C may be that these gasses may produce larger bubbles, for example 5 or 10 times larger than the bubbles created by the sparingly soluble gas, when the beverage is brought to atmospheric pressure by opening the aperture. This may provide a prickly mouth feel to the consumer when the beverage is consumed, for example, the prickly mouth-feel associated with carbonated beverages.

The beverage product wherein the fairly soluble gas is carbon dioxide.

The beverage product wherein the beverage is preferably a non-dairy beverage.

An advantage of the beverage product being a non-dairy beverage is that milk and dairy beverages may be too viscous. The high viscosity of the milk or dairy beverage may prevent the beverage from forming suitable foam and/or may change the mouth-feel of any foam produced. An advantage of the product being a non-dairy beverage is that the beverage may be lower in fat as dairy beverages are known to contain fat or cream.

The beverage product wherein the beverage is an aqueous beverage that does not comprise oil and is preferably not an emulsion.

The beverage product wherein the beverage is a carbonated aqueous drink optionally comprising ingredients selected from sugar, artificial sweeteners, colours, fruit, flavourings, fruit juices, preservatives and citric acid.

The beverage product comprising a fairly soluble and a sparingly soluble gas wherein the pectin concentration and pressure are arranged such that when the nozzle is opened the beverage sprays out of the container as a foam that may be stable for at least 5 seconds, preferably at least 10 seconds, more preferably at least 20, 30, 40, 50 or 60 seconds

A method of creating a long lasting mouth feel sensation from a beverage comprising, providing a beverage product comprising a dispenser and a beverage, in which the dispenser has a container for holding the beverage and a sealed aperture which is openable to enable the beverage to be dispensed from the container and in which the beverage is a liquid comprising an edible foam stabiliser and having a sparingly soluble gas dissolved therein, the beverage is held under a gaseous pressure in a head space above the beverage in the container, the gaseous pressure sufficient to propel the beverage from the dispenser as a foam and/or an effervescent foam and/or an effervescent liquid when the aperture is opened and opening the aperture to release the beverage as foam, and/or effervescent foam and/or effervescent liquid.

A method of creating a long lasting mouth feel sensation from a beverage comprising providing a beverage comprising an edible foam stabiliser and having a sparingly soluble gas dissolved therein and discharging the beverage through a tortuous path such that the sparingly soluble gas breaks out from the beverage to create foam, and/or effervescent foam and/or effervescent liquid.

Use of pectin as a foam stabiliser in a beverage comprising a sparingly soluble gas, such as nitrogen, dissolved in a liquid.

An advantage of pectin, and in particular pectin derived from sugar beet, is that it does not significantly increase the viscosity/thickness of the liquid.

The present invention advantageously provides foaming drink that can be dispensed directly into the mouth. The foaming drink may have foam and/or effervescent qualities. When the foam is dispensed the foam stabilisers cause the foam to last longer so that the consumer can enjoy longer-lasting effervescent foam.

### Detailed Description of the Invention

### Dispenser

The beverage product of the present invention may comprise a dispenser such as a can or bottle, for example a bottle made of glass or plastic. The shape of the dispenser is not particularly limited provided that it is able to hold the beverage and allow for a head space to contain gases that may be used to pressurise the beverage and/or provide effervescence and/or cause the beverage to form foam. The dispenser also comprises a sealed aperture that can be opened to allow dispensing of the beverage. The aperture is optionally re-sealable to allow a portion of the beverage to be dispensed and the remainder to be stored.

### Nozzle

The beverage product of the present invention may comprise a nozzle that seals the aperture but can be operated to open the aperture and allow the beverage to be dispensed. The nozzle may be openable using the hands or optionally the mouth or teeth. The beverage product, dispenser and/or nozzle may be designed to allow the beverage to be dispensed directly into the consumer's mouth. The nozzle is preferably designed to cause the beverage to form a jet when it passes through the nozzle under pressure. The dispenser may comprise a path, conduit or tube leading to the aperture, at least part of the path, conduit or tube may comprise a tortuous path that can cause the beverage to foam or spray. The nozzle preferably comprises a tortuous path so that the beverage is caused to foam or spray when it passes through the nozzle under pressure.

### Sparingly soluble gas

The sparingly soluble gas may preferably be effervescence-inducing and/or foam inducing, more preferably it may be foam inducing. The sparingly soluble gas is non-toxic and preferably selected from the group consisting of oxygen, nitrogen, hydrogen, noble gases, gaseous hydrocarbons and mixtures thereof. The sparingly soluble gas may preferably be nitrogen. The sparingly soluble gas may be at equilibrium between a gas in the headspace of the dispenser and gas dissolved in the beverage. The sparingly soluble gas may come out of solution very rapidly at atmospheric pressure, for example when the dispenser is opened, forming the liquid into a foam. The remaining dissolved sparingly soluble gas may form very small bubbles in the liquid that provide a smoother and/or silkier mouth-feel compared to a carbonated beverage. The small bubbles produced by a sparingly soluble gas, for example nitrogen, cause a more stable foam to be produced compared to the foam produced by the larger bubbles made by a soluble gas.

### Fairly Soluble gas

The beverage of the present invention may preferably comprise one or more fairly soluble gases in addition to the sparingly soluble gas. Fairly soluble gasses such as carbon dioxide are often used in carbonated beverages to provide bubbles in the beverage. The gas may be fairly soluble in the beverage and remain dissolved in the beverage while it is in a pressurised container. As soon as the pressure in the container is releases a portion of the gas may come out of solution and form bubbles that give the drink a distinctive prickly or effervescent mouth-feel. Carbon dioxide is commonly used for this purpose in carbonated beverages and it has the added advantage of providing a distinctive acidic taste to the beverage by the presence of dissolved carbonic acid. Fairly soluble gasses have a solubility of at least 1g/kg in water at 20°C. For example the fairly soluble gas may be carbon dioxide, which has a solubility of 1.69g/kg in water at 20°C. This solubility means that some of the soluble gas remains dissolved in the beverage and is released slowly at atmospheric pressure over the course of several hours. The fairly soluble gas therefore may continue to form bubbles in the beverage for several hours after it is brought to atmospheric pressure.

### Pressure

The beverage product wherein the beverage is preferably held under pressure by gas in the headspace at a pressure of at least 2.5 atmospheres gauge at 5 to 15°C. This gas may be made up entirely of a sparingly soluble gas or may also comprise a proportion of the soluble gas. The sparingly soluble gas or the mixture of gasses may be held in the dispenser at an over pressure of at least 2.5bar and preferably around 4 bar at standard temperature and pressure. In one embodiment the pressure of the soluble gas, for example carbon dioxide, does not exceed 1 atmosphere at 18°C.

In the present invention the pressure may preferably be high enough to propel the beverage at least 5cm, preferably at least 10cm more preferably at least 30cm, 50cm, or at least 100cm from the dispenser when the nozzle is opened. The pressure may be high enough to create foam and/or effervescent foam when the product is dispensed through the nozzle. Most preferably the pressure may cause the beverage to form foam when it exits from the dispenser. The beverage may exit from the dispenser as a mixture of liquid and foam or as a mixture of effervescent liquid and foam or effervescent foam. In one embodiment the beverage exits the dispenser as a mixture comprising about a quarter liquid and three quarters foam or effervescent foam.

### Foam

Foam may be a substance that is formed by trapping many gaseous bubbles in a liquid. Preferably foam is bubbles of a gas surrounded for a period of time by a liquid. The longer the bubbles of gas remain surrounded by liquid before they burst or coalesce to form larger bubbles, the more stable the foam.

In the present invention bubbles of gas may form in the beverage when the pressure is released by opening the aperture in the dispenser. In the present invention the beverage may be formulated to increase the time that the bubbles remain in the foam by including a foam stabiliser, for example pectin.

### Foam stabiliser

A foam stabiliser is a compound which increases the length of time that bubbles of gas remain in a foam before they merge together or burst.

The foam stabiliser of the present invention is preferably capable of stabilising the foam without significantly increasing the viscosity of the beverage.

The viscosity of the beverage may be about the same as the viscosity of water or higher than the viscosity of water. The viscosity of the beverage may be lower than the viscosity of milk.

The beverage may have a viscosity of the order of the viscosity of water, for example less than 2cP and preferably between 0.2 and 2cP. Water at 20 °C has a viscosity of 1.0020 cP or 0.001002 kg/(m·s).

The concentration of the foam stabiliser in the beverage may be adjusted so that the foam is stable for the required period of time. In the present invention the foam may preferably be stable for at least 5 seconds, preferably at least 10 seconds, more preferably at least 20, 30, 40, 50 or 60 seconds.

In the present invention the foam stabiliser may preferably be pectin, more preferably pectin derived from sugar beet. In the present invention pectin, preferably pectin derived from sugar beet, may be present at 0.015%-0.03%w/v.

A foam stabiliser, for example pectin, may cause more bubbles to be produced when a soluble and/or sparingly soluble gas comes out of solution in a beverage that does not comprise pectin.

### Effervescence

Effervescence is the process of forming bubbles as a gas escapes from a liquid. In the present invention a sparingly soluble gas and/or a fairly soluble gas may produce effervescence as dissolved gas escapes from the liquid as bubbles. A sparingly soluble gas, such as nitrogen, may produce small bubbles in the liquid giving the liquid a smooth and/or silky mouth-feel. A fairly soluble gas, such as carbon dioxide may produce larger bubbles in the liquid giving a prickly mouth-feel.

Production of bubbles in a beverage may product foam in the beverage. Addition of a foam stabiliser, for example pectin, may make the foam last longer because it takes more time for the bubbles to burst or coalesce in to large bubbles.

### Effervescent foam

In the present invention one or more sparingly soluble gasses, such as nitrogen as well as one or more soluble gasses, such as carbon dioxide, may be present. The beverage may also comprise a foam stabiliser such as pectin. The sparingly soluble gas may provide small bubbles in the beverage. The sparingly soluble gas may come out of solution rapidly and help to create foam. The pressure causes the foaming beverage to be propelled from the dispenser to a distance of at least 5 cm, preferably at least 10cm more preferably at least 30cm, 50cm, or at least 100cm from the dispenser when the nozzle is opened. The soluble gas may come out of the solution more slowly and provides larger bubbles. These bubbles provide the foaming beverage with the distinctive prickly effervescent mouth-feel that is known from, for example carbonated drinks. The foam stabiliser present in the beverage enables the effervescent foam to last longer after it has been dispensed from the dispenser.

### Longer lasting effervescent mouth feel

The foam stabiliser present in the beverage enables the foam to last longer after it has been dispensed from the dispenser. In one embodiment it is envisaged that the foam is dispensed directly into the mouth. The foam may create an effervescent, foamy or fizzy feeling in the mouth that will last for longer than the prickly or foamy feeling provided by carbonated drinks or drinks comprising dissolved nitrogen because of the foam stabiliser in the beverage.

In one embodiment the present invention relates to the beverage product as described in patent number EP 1368254 with the addition of an edible foam stabiliser such as pectin, preferably pectin derived from sugar beet.

The contents of patent number EP 1368254 are incorporated herein by reference.

## Claims

**1.** A beverage product comprising a dispenser and a beverage, in which the dispenser has a container for holding the beverage and a sealed aperture which is openable to enable the beverage to be dispensed from the container and in which the beverage is a liquid comprising an edible foam stabiliser and having a sparingly soluble gas dissolved therein, the beverage is held under a gaseous pressure in a head space above the beverage in the container, the gaseous pressure sufficient to propel the beverage from the dispenser as a foam and/or an effervescent foam and/or an effervescent liquid when the aperture is opened.

**3.** The beverage product of claim 1 arranged such that the beverage is propelled from the dispenser as foam.

**3.** The beverage product of claim 2 where in the beverage produces more and/or longer lasting foam than a beverage that does not comprise an edible foam stabiliser.

**4.** The beverage product of any preceding claim wherein the sparingly soluble gas is nitrogen or oxygen.

**5.** The beverage product of any preceding claim wherein the edible foam stabiliser is pectin.

**6.** The beverage product of claim 5 wherein the pectin is derived from sugar beet.

**7.** The beverage product of claim 5 or 6 wherein the pectin is present at 0.015%-0.03%w/v.

**8.** The beverage product of any preceding claim wherein the foam produced is stable for at least 5 seconds.

**9.** The beverage product of any preceding claim wherein the beverage is held under pressure by gas in the headspace at a pressure of at least 2.5 atmospheres gauge at 5 to 15°C.

**10.** The beverage product of claim 9 wherein the pressure is high enough to propel the beverage at least 5cm.

**11.** The beverage product of any preceding claim wherein the beverage has a viscosity of less than 2cP.

**12.** The beverage product of any preceding claim where the foam stabiliser causes more bubbles to be produced when a soluble and/or sparingly soluble gas comes out of solution in a beverage that does not comprise pectin.

**13.** A method of creating a long lasting mouth feel sensation from a beverage comprising, providing a beverage product comprising a dispenser and a beverage, in which the dispenser has a container for holding the beverage and a sealed aperture which is openable to enable the beverage to be dispensed from the container and in which the beverage is a liquid comprising an edible foam stabiliser and having a sparingly soluble gas dissolved therein, the beverage is held under a gaseous pressure in a head space above the beverage in the container, the gaseous pressure sufficient to propel the beverage from the dispenser as a foam and/or an effervescent foam and/or an effervescent liquid when the aperture is opened and opening the aperture to release the beverage as foam, and/or effervescent foam and/or effervescent liquid.

**14.** A method of creating a long lasting mouth feel sensation from a beverage comprising providing a beverage comprising an edible foam stabiliser and having a sparingly soluble gas dissolved therein and discharging the beverage through a tortuous path such that the sparingly soluble gas breaks out from the beverage to create foam, and/or effervescent foam and/or effervescent liquid.

**15.** Use of pectin as a foam stabiliser in a beverage comprising a sparingly soluble gas, such as nitrogen, dissolved in a liquid.
